# FASCICULE DE BREVET EUROPEEN

(11) **EP 2 066 551 B1**
(45) Date de publication et mention de la délivrance du brevet: **07.07.2010**
(21) Numéro de dépôt: 07848257.7
(22) Date de dépôt: 19.09.2007
(51) Int. Cl.: B62D 25/08, B60K 11/04, B62D 65/04

(54) **FACE AVANT DE VEHICULE AUTOMOBILE, SERIE DE FACES AVANT ET PROCEDE D'ASSEMBLAGE ASSOCIES**
VORDER- ODER HINTERVERKLEIDUNG FÜR EIN KRAFTFAHRZEUG, REIHE VON VORDER- ODER HINTERVERKLEIDUNGEN UND VERFAHREN ZU IHRER HERSTELLUNG
MOTOR VEHICLE FRONT-END PANEL, SERIES OF FRONT-END PANELS AND ASSEMBLY METHOD

(30) Priorité: 25.09.2006 FR 0608401
(43) Date de publication de la demande: 10.06.2009
(73) Titulaire: Faurecia Bloc Avant, 92000 Nanterre (FR)
(72) Inventeur: BIERJON, Didier, 25400 Audincourt (FR)
(74) Mandataire: Jacobson, Claude
(86) Numéro de dépôt international: PCT/FR2007/001524
(87) Numéro de publication internationale: WO 2008/037873

(56) Documents cités:
- EP-A2- 1 072 501
- FR-A1- 2 833 559

## Description

La présente invention concerne une face avant de véhicule automobile, du type comprenant :
- une traverse transversale supérieure, destinée à être fixée sur des éléments de caisse du véhicule ;
- un cadre, le cadre étant fixé sous la traverse et comprenant une poutre inférieure transversale et deux montants latéraux reliant la poutre inférieure à la traverse.

De telles faces avant constituent des éléments de structure transversaux destinés à supporter divers équipements du véhicule comme par exemple un échangeur thermique, un groupe moto-ventilateur, des projecteurs, des clignotants ou/et une serrure de capot.

On connaît de FR-A-2 833 559 une face avant du type précité. Une telle face avant est assemblée avec ses équipements par un équipementier, puis est fournie à un constructeur automobile pour être montée sur des éléments de caisse à l'avant du véhicule. La forme de la face avant dépend de l'architecture du véhicule et de la forme générale de la carrosserie.

Une telle face avant ne donne pas entière satisfaction. En effet, pour réduire les coûts, les constructeurs automobiles utilisent de manière croissante une même plateforme de véhicule sur laquelle sont montées des carrosseries de formes et de hauteurs différentes. Une face avant spécifique doit donc être développée et fabriquée pour chacun des types de véhicules assemblés à base d'une même plateforme, ce qui augmente les coûts.

Un but de l'invention est d'obtenir à moindre coût une face avant de support d'équipement pour véhicules, tout en conservant une bonne rigidité structurelle de la face avant.

L'invention a en outre pour objet une série de faces avant de véhicules automobiles, chaque face avant étant du type comprenant :
- une traverse transversale supérieure, destinée à être fixée sur des éléments de caisse du véhicule ;
- un cadre, le cadre étant fixé sous la traverse et comprenant une poutre inférieure transversale et deux montants latéraux reliant la poutre inférieure à la traverse,
**caractérisé en ce que** la série comprend :
- au moins une première face avant dans laquelle chaque montant comprend une partie inférieure solidaire de la poutre, et une partie supérieure solidaire de la traverse, la partie supérieure et la partie inférieure étant mobiles l'une par rapport à l'autre entre une configuration démontée dans laquelle la partie supérieure est située à l'écart de la partie inférieure, et une configuration assemblée dans laquelle la partie supérieure et la partie inférieure sont emboîtées l'une dans l'autre ;
- au moins une deuxième face avant comprenant une poutre inférieure et une partie inférieure de montant de structures identiques respectivement à la poutre inférieure et à la partie inférieure de montant de la ou de chaque première face avant, la ou chaque deuxième face avant comprenant un montant de hauteur inférieure à la hauteur du montant de la ou de chaque première face avant.

La série de faces avant selon l'invention peut comprendre l'une ou plusieurs des caractéristiques suivantes prise(s) isolément ou suivant toutes combinaisons techniquement possibles :
- la traverse supérieure de la ou de chaque deuxième face avant est fixée directement sur la partie inférieure pour former un montant de hauteur inférieure à la hauteur du montant de la ou de chaque première face avant ; et
- la ou chaque deuxième face avant comprend une partie supérieure solidaire de la traverse, la partie supérieure et la partie inférieure étant mobiles l'une par rapport à l'autre entre une configuration démontée dans laquelle la partie supérieure est située à l'écart de la partie inférieure, et une configuration assemblée dans laquelle la partie supérieure et la partie inférieure sont emboîtées l'une dans l'autre, la hauteur de la partie supérieure du montant de la ou de chaque deuxième face avant étant différente de la hauteur de la partie supérieure du montant de la ou de chaque première face avant.

L'invention a également pour objet un procédé d'assemblage d'une série de faces avant de véhicules automobiles, chaque face avant étant du type comprenant :
- une traverse transversale supérieure, destinée à être fixée sur des éléments de caisse du véhicule ;
- un cadre, le cadre étant fixé sous la traverse et comprenant une poutre inférieure transversale et deux montants latéraux reliant la poutre inférieure à la traverse,
**caractérisé en ce que** le procédé comprend les étapes suivantes:
- fourniture d'une pluralité d'ossatures inférieures identiques, chaque ossature comprenant une poutre inférieure et une partie inférieure de montant solidaire de la poutre inférieure ;
- assemblage d'au moins une première face avant comprenant la fourniture et le déplacement d'une partie supérieure de montant par rapport à la partie inférieure d'une des ossatures identiques, entre une configuration démontée dans laquelle la partie supérieure est située à l'écart de la partie inférieure, et une configuration assemblée dans laquelle la partie supérieure et la partie inférieure sont emboîtées l'une dans l'autre et comprenant la fixation de la partie supérieure sur la traverse ;
- assemblage d'au moins une deuxième face avant comprenant l'utilisation d'une des ossatures inférieures identiques pour former un montant de hauteur inférieure à la hauteur du montant de la ou de chaque première face avant.

L'invention sera mieux comprise à la lecture de la description qui va suivre, donnée uniquement à titre d'exemple, et faite en se référant aux dessins annexés, sur lesquels :
- la figure 1 est une vue avant partielle d'une première face avant selon l'invention ;
- la figure 2 est une vue partielle en perspective éclatée de dessous d'une traverse supérieure, et des parties supérieure et inférieure d'un montant de la face avant de la figure 1 ;
- la figure 3 est une vue analogue à la figure 1 d'un deuxième groupe de faces avant d'une série de faces avant selon l'invention, la série comprenant un premier groupe de faces avant identiques à celle de la Figure 1; et
- la figure 4 est une vue schématique de face d'une deuxième série de faces avant selon l'invention.

Dans tout ce qui suit, les orientations sont des orientations habituelles d'un véhicule automobile. Ainsi, les termes « avant », « arrière », « supérieur », « inférieur », « transversal », « longitudinal », « horizontal », « vertical », « gauche », « droit » s'entendent par rapport au sens normal de circulation d'un véhicule automobile et à la position d'un conducteur.

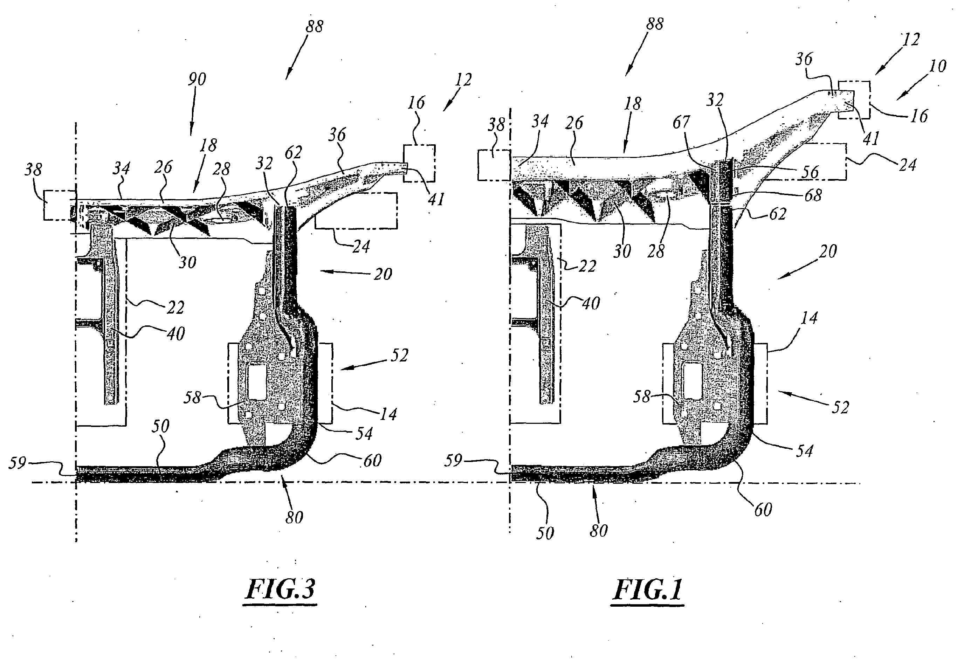

Une première face avant 10 selon l'invention est représentée sur la figure 1. Cette face avant 10 est fixée transversalement à l'avant d'éléments de caisse 12 du véhicule comprenant des longerons inférieurs 14 et des barres supérieures longitudinales 16 de fixation des ailes.

La face avant 10 comprend une traverse supérieure 18, un cadre 20 de support d'équipement, fixé sous la traverse 18, et des équipements comprenant un ventilateur 22 et des projecteurs 24 portés par la face avant 10.

La traverse supérieure 18 comprend un profilé transversal 26 horizontal délimitant une gouttière 28 ouverte vers le bas. La traverse 18 comprend en outre des nervures de renfort 30 et des manchons 32 de fixation du cadre 20 placés dans la gouttière 28.

Le profilé 26 présente une région centrale 34 s'étendant en regard du cadre 20 et deux prolongements latéraux 36 qui font saillie latéralement à partir de la région centrale 34.

La région centrale 34 porte une serrure 38 de verrouillage du capot couvrant le moteur, et une armature 40 de support du ventilateur.

Les prolongements latéraux 36 présentent une extrémité libre 41 fixée à l'avant des barres 16 de fixation des ailes. Les projecteurs 24 sont rapportés sous les prolongements latéraux 36.

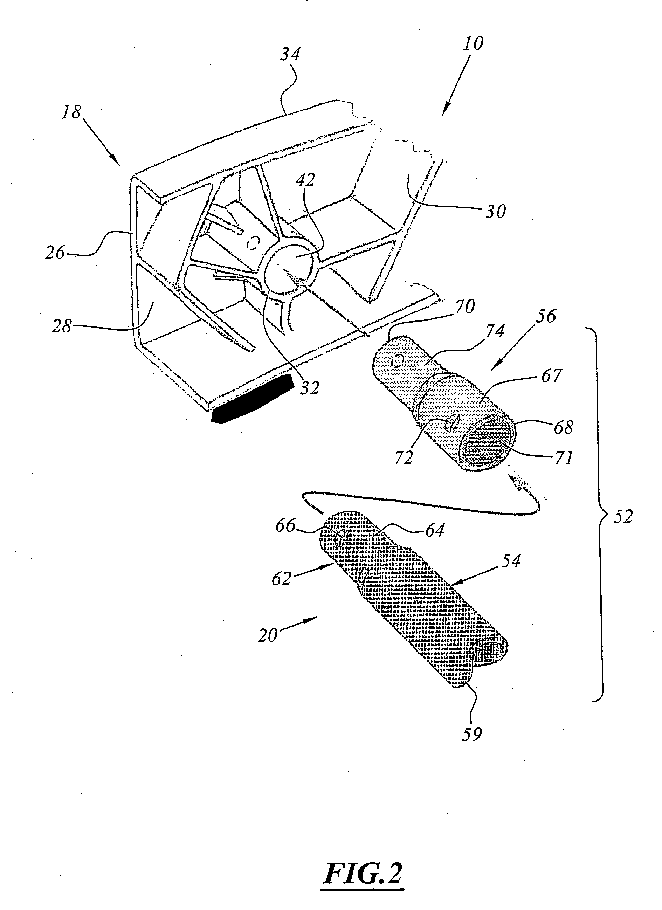

Comme illustré par la figure 2, les nervures 30 délimitent un réseau d'alvéoles dans la gouttière 28.

Le manchon 32 de fixation est placé en appui entre des nervures 30. Il présente un logement cylindrique 42 de réception du cadre s'ouvrant vers le bas.

Comme illustré par les figures 1 et 2, le cadre de support 20 comprend une poutre inférieure 50 et deux montants latéraux 52 droit et gauche reliant la poutre inférieure 50 à la traverse 18, chaque montant 52 comportant une partie inférieure 54 solidaire de la poutre inférieure 50 et une partie supérieure 56 solidaire de la traverse 18. Pour simplifier les dessins, un seul montant 52 est représenté sur la figure 1.

Le cadre 20 comprend en outre, pour chaque montant 52, une plaque terminale 58 de fixation aux longerons 14, solidaire du montant 52 et de la poutre 50.

La poutre inférieure 50 et la partie inférieure 54 sont venues de matière. Elles sont formées à partir d'un élément tubulaire creux 59 métallique définissant un coude 60 entre la poutre inférieure 50 et la partie inférieure 54.

L'élément tubulaire 59 présente dans cet exemple une section circulaire. Il est obtenu par hydroformage. En variante, l'élément tubulaire 59 présente une section carrée, ovoïde ou d'une autre forme. Le logement 42 présente une forme correspondant sensiblement à la forme de l'élément tubulaire 59.

La section moyenne de l'élément tubulaire 59 est sensiblement constante.

La poutre inférieure 50 s'étend sensiblement parallèlement à la traverse 18 entre les montants 52. Elle s'étend sous les plaques terminales 58 et sous le ventilateur 22.

La partie inférieure 54 de chaque montant 52 s'étend sensiblement verticalement entre le coude 60 et une extrémité supérieure 62 d'emboîtement dans la partie supérieure 56.

L'extrémité 60 définit un tenon d'emboîtement 64 de section horizontale sensiblement inférieure à la section moyenne de la partie inférieure 54. Le tenon 64 délimite un orifice latéral 66 d'introduction d'un organe de fixation.

La partie supérieure 56 est réalisée à base d'un élément tubulaire 67 de section horizontale moyenne sensiblement égale à la section horizontale moyenne de la partie inférieure 54.

Il s'étend entre une extrémité inférieure 68 de réception de la partie inférieure 54 et une extrémité supérieure 70 de fixation sur la traverse 18.

La hauteur de la partie supérieure 56, prise entre les extrémités 68 et 70, est inférieure à la hauteur de la partie inférieure 54. Dans cet exemple, la hauteur de la partie supérieure 56 est au moins deux fois inférieure à celle de la partie inférieure 54.

L'extrémité inférieure 68 définit un logement 71 vertical de réception du tenon 64, de section complémentaire à celle du tenon 64.

Un orifice 72 latéral de passage d'un élément de fixation est ménagé dans l'élément tubulaire 67. Il est situé en regard de l'orifice latéral 66 de la partie inférieure 54 lorsque le tenon 64 est inséré dans le logement 71.

L'extrémité supérieure 68 délimite un tenon 74 supérieur de fixation dans le manchon 32. Le tenon 74 présente une section horizontale inférieure à la section moyenne de la partie supérieure 56. Cette section est sensiblement complémentaire de la section horizontale intérieure du logement 42.

Selon l'invention, la partie inférieure 54 est mobile par rapport à la partie supérieure 56 lors du montage de la face avant 10, entre une configuration démontée représentée sur la figure 2, dans laquelle la partie supérieure 56 est située à l'écart de la partie inférieure 54, et une configuration assemblée dans laquelle la partie supérieure 54 et la partie supérieure 56 sont emboîtées l'une dans l'autre.

Dans la configuration assemblée, représentée sur la figure 1, le tenon 64 de la partie inférieure 54 a été inséré par emboîtement dans le logement 71 à l'extrémité 68 inférieure de la partie supérieure 56. Un organe de fixation peut être rapporté entre le tenon 64 et la partie supérieure 56.

Dans cet exemple, l'extrémité supérieure 70 de la partie supérieure 56 est fixée sous la traverse par insertion en force du tenon supérieur 74 dans le passage 62.

En variante, une vis ou un rivet est introduit à travers des ouvertures complémentaires ménagées dans le manchon de fixation 32 et dans le tenon supérieur 74.

En référence à la figure 1, les plaques terminales 58 sont fixées à l'avant des longerons 14. Une poutre de pare-chocs (non représentée) peut être fixée à l'avant des plaques terminales 58, avec interposition éventuelle d'absorbeurs de chocs.

Le procédé de montage de la première face avant 10 selon l'invention va maintenant être décrit.

Initialement, une ossature 80 inférieure comprenant une poutre inférieure 50 et une partie inférieure 54 de montant 52 est fournie. Comme on le verra plus bas, cette ossature 80 est commune à différents types de véhicules d'une même plateforme.

En fonction de la hauteur du capot sur lequel le véhicule doit être monté, une partie supérieure 56 de hauteur prédéterminée est sélectionnée. Chaque partie supérieure 56 est fixée en force dans une traverse 18 par insertion du tenon 74 dans le manchon de fixation 32.

Puis, pour chaque montant 52, la partie supérieure 56 est déplacée par rapport à la partie inférieure 54 pour insérer le tenon 64 de la partie inférieure 54 dans le logement 71.

La partie inférieure 54 est alors emboîtée dans la partie supérieure 56 pour former le montant 52.

Le montant 52 présente ainsi une rigidité structurelle adéquate pour supporter les équipements du véhicule automobile comme le ventilateur 22 ou les projecteurs 24 et pour assurer la bonne tenue mécanique de la face avant 10 en cas de choc frontal contre le véhicule.

La standardisation de l'ossature inférieure 80 commune à différents type de véhicules réduit notablement le coût de la face avant 10, tout en s'adaptant à des hauteurs différentes de véhicules automobiles.

Ainsi, une première série 88 de faces avant 10, 90 selon l'invention peut être réalisée à moindre coût. Cette série comprend un premier groupe de faces avant 10 identiques à celle représentée sur la figure 1 et décrite ci-dessus.

Une deuxième face avant 90 représentative d'un deuxième groupe de faces avant de la première série 88 est représentée sur la figure 3. Cette deuxième face avant 90 comprend une ossature inférieure 80 identique à l'ossature inférieure 80 de la face avant 10, avec des poutres inférieures 50 et des parties verticales 54 venues de matière et de mêmes dimensions que celles de la poutre inférieure 50 et de la partie verticale 54 d'une autre ossature 80.

Toutefois, chaque montant 52 de la deuxième face avant 90 est dépourvu de partie supérieure 56.

A cet effet, pour chaque deuxième face avant 90, chaque partie verticale 54 de l'ossature 80 est fixée directement sur la traverse 18, par insertion de la partie verticale 54 dans un manchon de fixation 32 de cette traverse 18.

Ainsi, les montants 52 des faces avant 90 du deuxième groupe de la série sont formés exclusivement par les parties verticales 54.

La deuxième face avant 90 présente donc une hauteur, prise entre la poutre inférieure 50 et la traverse 18, inférieure à la hauteur de chaque première face avant 10 du premier groupe de la série.

Le procédé d'assemblage de cette série de faces avant comprend donc la fourniture d'une pluralité d'ossatures inférieures 80 identiques, chaque ossature 80 comprenant une poutre inférieure 50 et une partie inférieure 54 de montant solidaire de la poutre inférieure 50.

Puis, le procédé comprend l'assemblage d'un premier groupe de faces avant 10 comprenant l'insertion d'une partie supérieure 56 entre la traverse 18 et la partie inférieure 54, par emboîtement de la partie supérieure 56 sur la partie inférieure 54 comme décrit plus haut, et par fixation de la partie supérieure 56 sous la traverse 18.

Le procédé comprend en outre l'assemblage d'un deuxième groupe de faces avant 90 par montage de la traverse 18 directement sur la partie inférieure 54 d'une des ossatures 80.

Dans une variante, chaque partie supérieure 56 est fixée sur la traverse 18 par surmoulage de la traverse 18 sur cette partie 56.

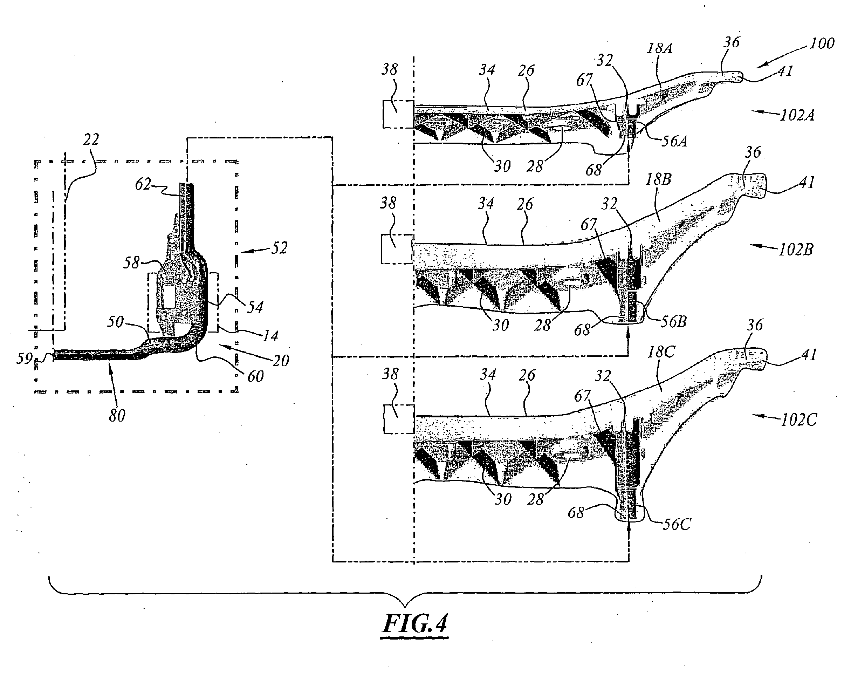

Comme illustré par la figure 4, une deuxième série 100 de faces avant 102A, 102B, 102C de hauteurs différentes est réalisée.

Dans cette série, des parties supérieures 56A, 56B, 56C de hauteurs différentes sont fixées sur des traverses 18A, 18B, 18C de formes différentes adaptées chacune à la carrosserie du véhicule sur lesquels les faces avant 102A, 102B, 102C respectives vont être montées.

Les parties supérieures 56A, 56B, 56C présentent dans cet exemple un tenon situé à leur extrémité inférieure. Le tenon est destiné à être reçu dans un logement complémentaire ménagé à l'extrémité supérieure d'une partie inférieure d'une ossature 80.

Puis, une pluralité d'ossatures inférieures 80 identiques est réalisée, dans laquelle chaque ossature 80 comprend une poutre inférieure 50 et une partie inférieure 54. Les hauteurs des parties inférieures 54 sont toutes identiques.

Trois types de faces avant 102A, 102B, 102C, de hauteurs différentes sont assemblées par emboîtement sélectif d'une partie supérieure 56A, 56B, 56C de hauteur déterminée dans la partie inférieure 54 d'une ossature 80, en fonction de la hauteur du véhicule dans laquelle la face avant 102A, 102B, 102C sera montée.

La deuxième série 100 de faces avant de l'invention comprend donc au moins deux types de faces avant 102A, 102B, 102C présentant des montants 52 de hauteurs différentes, mais conservant des ossatures inférieures 80 de structure identique, afin de diminuer par standardisation le coût de chaque face avant.

## Revendications

1. Série (88 ; 100) de faces avant de véhicules automobiles, chaque face avant (10 ; 90 ; 102A, 102B, 102C) étant du type comprenant :
- une traverse (18) transversale supérieure, destinée à être fixée sur des éléments de caisse (12) du véhicule ;
- un cadre (20), le cadre (20) étant fixé sous la traverse (18) et comprenant une poutre inférieure (50) transversale et deux montants latéraux (52) reliant la poutre inférieure (50) à la traverse (18),
**caractérisé en ce que** la série (88 ; 100) comprend :
- au moins une première face avant (10 ; 102A, 102B, 102C) dans laquelle chaque montant (52) comprend une partie inférieure (54) solidaire de la poutre (50), et une partie supérieure (56 ; 56A , 56B ; 56C) solidaire de la traverse (18), la partie supérieure (56 ; 56A , 56B ; 56C) et la partie inférieure (54) étant mobiles l'une par rapport à l'autre entre une configuration démontée dans laquelle la partie supérieure (56 ; 56A , 56B ; 56C) est située à l'écart de la partie inférieure (54), et une configuration assemblée dans laquelle la partie supérieure (56 ; 56A , 56B ; 56C) et la partie inférieure (54) sont emboîtées l'une dans l'autre ;
- au moins une deuxième face avant (90 ; 102A, 102B, 102C) comprenant une poutre inférieure (50) et une partie inférieure (54) de montant de structures identiques respectivement à la poutre inférieure (50) et à la partie inférieure (54) de montant de la ou de chaque première face avant (10 ; 102A, 102B, 102C), la ou chaque deuxième face avant (90 ; 102A, 102B, 102C) comprenant un montant (52) de hauteur inférieure à la hauteur du montant (52) de la ou de chaque première face avant.

2. Série (88) selon la revendication 1, **caractérisée en ce que** la traverse supérieure (18) de la ou de chaque deuxième face avant (90) est fixée directement sur la partie inférieure (54) pour former un montant (52) de hauteur inférieure à la hauteur du montant (52) de la ou de chaque première face avant (10).

3. Série (100) selon la revendication 1, **caractérisée en ce que** la ou chaque deuxième face avant (102A, 102B, 102C) comprend une partie supérieure (56A, 56B, 56C) solidaire de la traverse (18), la partie supérieure (56A, 56B, 56C) et la partie inférieure (54) étant mobiles l'une par rapport à l'autre entre une configuration démontée dans laquelle la partie supérieure (56A, 56B, 56C) est située à l'écart de la partie inférieure (54), et une configuration assemblée dans laquelle la partie supérieure (56A, 56B, 56C) et la partie inférieure (54) sont emboîtées l'une dans l'autre, la hauteur de la partie supérieure (56A, 56B, 56C) du montant de la ou de chaque deuxième face avant (102A, 102B, 102C) étant différente de la hauteur de la partie supérieure (56) du montant de la ou de chaque première face avant (102A, 102B, 102C).

4. Série (88, 100) selon la revendication 3, **caractérisée en ce que,** pour chaque face avant (10 ; 102A, 102B, 102C), la partie inférieure (54) et la partie supérieure (56 ; 56A, 56B ; 56C) sont chacune formées à base d'un élément tubulaire (59, 67).

5. Série (88, 100) selon l'une quelconque des revendications 3 ou 4, **caractérisée en ce que** pour chaque face avant (10 ; 102A, 102B, 102C), la poutre inférieure (50) est formée à partir du même élément tubulaire (59) que la partie inférieure (54), ledit élément tubulaire (59) étant coudé entre la poutre inférieure (50) et la partie inférieure (54).

6. Série (88, 100) selon l'une quelconque des revendications 3 à 5, **caractérisée en ce que,** pour chaque face avant (10 ; 102A, 102B, 102C), la section horizontale moyenne de la partie inférieure (54) est sensiblement égale à la section horizontale moyenne de la partie supérieure (56 ; 56A , 56B ; 56C).

7. Série (88, 100) selon l'une quelconque des revendications 3 à 6, **caractérisée en ce que,** pour chaque face avant (10 ; 102A, 102B, 102C), la partie supérieure (56 ; 56A, 56B ; 56C) est fixée par enserrement dans la traverse supérieure (18).

8. Série (88, 100) selon l'une quelconque des revendications 3 à 7, **caractérisée en ce que** chaque face avant (10 ; 102A, 102B, 102C), comprend un organe de fixation rapporté à travers la partie supérieure (56 ; 56A , 56B ; 56C) et la traverse supérieure (18).

9. Série (88, 100) selon l'une quelconque des revendications précédentes, **caractérisée en ce que** la traverse supérieure (18) porte au moins un organe (38) de verrouillage d'un capot.

10. Procédé d'assemblage d'une série (88 ; 100) de faces avant de véhicules automobiles, chaque face avant (10 ; 90 ; 102A, 102B, 102C) étant du type comprenant :
- une traverse (18) transversale supérieure, destinée à être fixée sur des éléments de caisse (12) du véhicule ;
- un cadre (20), le cadre (20) étant fixé sous la traverse (18) et comprenant une poutre inférieure (50) transversale et deux montants latéraux (52) reliant la poutre inférieure (50) à la traverse (18),
**caractérisé en ce que** le procédé comprend les étapes suivantes:
- fourniture d'une pluralité d'ossatures inférieures (80) identiques, chaque ossature (80) comprenant une poutre inférieure (50) et une partie inférieure (54) de montant solidaire de la poutre inférieure (50);
- assemblage d'au moins une première face avant (10 ; 102A, 102B, 102C) comprenant la fourniture et le déplacement d'une partie supérieure (56 ; 56A , 56B ; 56C) de montant par rapport à la partie inférieure (54) d'une des ossatures identiques (80), entre une configuration démontée dans laquelle la partie supérieure (56 ; 56A , 56B ; 56C) est située à l'écart de la partie inférieure (54), et une configuration assemblée dans laquelle la partie supérieure (56 ; 56A , 56B ; 56C) et la partie inférieure (54) sont emboîtées l'une dans l'autre et comprenant la fixation de la partie supérieure (56 ; 56A , 56B ; 56C) sur la traverse (18);
- assemblage d'au moins une deuxième face avant (90; 102A, 102B, 102C) comprenant l'utilisation d'une des ossatures inférieures identiques (80) pour former un montant (52) de hauteur inférieure à la hauteur du montant (52) de la ou de chaque première face avant (10 ; 102A, 102B, 102C).

## Claims

1. A series (88; 100) of front panels of motor vehicles, each front panel (10; 90; 102A, 102B, 102C) being of the type comprising:
- an upper transverse cross-member (18), intended to be fixed to body elements (12) of the vehicle;
- a frame (20), the frame (20) being fixed beneath the cross-member (18) and comprising a transverse lower beam (50) and two lateral uprights (52) connecting the lower beam (50) to the cross-member (18),
**characterised in that** the series (88; 100) comprises:
- at least one first front panel (10; 102A, 102B, 102C) in which each upright (52) comprises a lower part (54) integral with the beam (50), and an upper part (56; 56A, 56B; 56C) integral with the cross-member (18), the upper part (56; 56A, 56B; 56C) and the lower part (54) being mobile relative to one another between a dismantled configuration in which the upper part (56; 56A, 56B; 56C) is located apart from the lower part (54) and an assembled configuration in which the upper part (56; 56A, 56B; 56C) and the lower part (54) are fitted one inside the other;
- at least one second front panel (90; 102A, 102B, 102C) comprising a lower beam (50) and a lower upright part (54) of structures identical to the lower beam (50) and to the lower upright part (54) respectively of the or of each first front panel (10; 102A, 102B, 102C), the or each second front panel (90; 102A, 102B, 102C) comprising an upright (52) of a height less than the height of the upright (52) of the or of each first front panel.

2. A series (88) according to Claim 1, **characterised in that** the upper cross-member (18) of the or of each second front panel (90) is fixed directly to the lower part (54) to form an upright (52) of a height less than the height of the upright (52) of the or of each first front panel (10).

3. A series (100) according to Claim 1, **characterised in that** the or each second front panel (102A, 102B, 102C) comprises an upper part (56A, 56B, 56C) integral with the cross-member (18), the upper part (56A, 56B, 56C) and the lower part (54) being mobile relative to one another between a dismantled configuration in which the upper part (56A, 56B, 56C) is located apart from the lower part (54) and an assembled configuration in which the upper part (56A, 56B, 56C) and the lower part (54) are fitted one inside the other, the height of the upper part (56A, 56B, 56C) of the upright of the or of each second front panel (102A, 102B, 102C) being different from the height of the upper part (56) of the upright of the or of each first front panel (102A, 102B, 102C).

4. A series (88, 100) according to Claim 3, **characterised in that,** for each front panel (10; 102A, 102B, 102C), the lower part (54) and the upper part (56; 56A, 56B; 56C) are each formed based on a tubular element (59, 67).

5. A series (88, 100) according to any one of Claims 3 or 4, **characterised in that,** for each front panel (10; 102A, 102B, 102C), the lower beam (50) is formed from the same tubular element (59) as the lower part (54), said tubular element (59) being angled between the lower beam (50) and the lower part (54).

6. A series (88, 100) according to any one of Claims 3 to 5, **characterised in that,** for each front panel (10; 102A, 102B, 102C), the average horizontal section of the lower part (54) is substantially equal to the average horizontal section of the upper part (56; 56A, 56B; 56C).

7. A series (88, 100) according to any one of Claims 3 to 6, **characterised in that,** for each front panel (10; 102A, 102B, 102C), the upper part (56; 56A, 56B; 56C) is fixed by clasping in the upper cross-member (18).

8. A series (88, 100) according to any one of Claims 3 to 7, **characterised in that** each front panel (10; 102A, 102B, 102C) comprises a fixing member attached via the upper part (56; 56A, 56B; 56C) and the upper cross-member (18).

9. A series (88, 100) according to any one of the preceding claims, **characterised in that** the upper cross-member (18) bears at least one locking member (38) for a bonnet.

10. A process for assembling a series (88; 100) of front panels of motor vehicles, each front panel (10; 90; 102A, 102B, 102C) being of the type comprising:
- an upper transverse cross-member (18), intended to be fixed to body elements (12) of the vehicle;
- a frame (20), the frame (20) being fixed beneath the cross-member (18) and comprising a transverse lower beam (50) and two lateral uprights (52) connecting the lower beam (50) to the cross-member (18),
**characterised in that** the process comprises the following steps:
- providing a plurality of identical lower frameworks (80), each framework (80) comprising a lower beam (50) and a lower upright part (54) integral with the lower beam (50);
- assembling at least one first front panel (10; 102A, 102B, 102C) comprising the provision and the displacement of an upper upright part (56; 56A, 56B; 56C) relative to the lower part (54) of one of the identical frameworks (80), between a dismantled configuration in which the upper part (56; 56A, 56B; 56C) is located apart from the lower part (54) and an assembled configuration in which the upper part (56; 56A, 56B; 56C) and the lower part (54) are fitted one inside the other, and comprising the fixing of the upper part (56; 56A, 56B; 56C) to the cross-member (18);
- assembling at least one second front panel (90; 102A, 102B, 102C) comprising the use of one of the identical lower frameworks (80) to form an upright (52) of a height less than the height of the upright (52) of the or of each first front panel (10; 102A, 102B, 102C).

## Patentansprüche

1. Reihe (88; 100) von Vorderseiten von Kraftfahrzeugen, wobei jede Vorderseite (10; 90; 102A, 102B, 102C) von dem Typ ist, der umfasst:
- eine obere Quertraverse (18), die dazu dient, an Karosserieelementen (12) des Fahrzeugs befestigt zu werden,
- einen Rahmen (20), wobei der Rahmen unter der Traverse (18) befestigt ist und einen unteren Querbalken (50) und zwei Seitenpfosten (52) umfasst, die den unteren Balken (50) mit der Traverse (18) verbinden,
**dadurch gekennzeichnet, dass** die Reihe (88; 100) umfasst:
- mindestens eine erste Vorderseite (10; 102A, 102B, 102C), bei der jeder Pfosten (52) einen unteren Bereich (54), der mit dem Balken (50) verbunden ist, und einen oberen Bereich (56; 56A, 56B; 56C), der mit der Traverse (18) verbunden ist, umfasst, wobei der obere Bereich (56; 56A, 56B; 56C) und der untere Bereich (54) zueinander beweglich sind zwischen einem demontierten Zustand, bei dem der obere Bereich (56; 56A, 56B; 56C) mit Abstand zum unteren Bereich (54) liegt, und einem zusammengesetzten Zustand, bei dem der obere Bereich (56; 56A, 56B; 56C) und der untere Bereich (54) ineinandergefügt sind;
- mindestens eine zweite Vorderseite (90; 102A, 102B, 102C), die einen unteren Balken (50) und einen unteren Pfostenbereich (54) von jeweils identischer Struktur zu dem unteren Balken (50) und dem unteren Pfostenbereich (54) der oder jeder ersten Vorderseite (10; 102A, 102B, 102C) umfasst, wobei die oder jede zweite Vorderseite (90; 102A, 102B, 102C) einen Pfosten (52) mit einer geringeren Höhe als die Höhe des Pfostens (52) der oder jeder ersten Vorderseite umfasst.

2. Reihe (88) nach Anspruch 1, **dadurch gekennzeichnet, dass** die obere Traverse (18) der oder jeder zweiten Vorderseite (90) direkt an dem unteren Bereich (54) befestigt ist, um einen Pfosten mit geringerer Höhe als die Höhe des Pfostens (52) der oder jeder Vorderseite (10) zu bilden.

3. Reihe (100) nach Anspruch 1, **dadurch gekennzeichnet, dass** die oder jede zweite Vorderseite (102A, 102B, 102C) einen oberen Bereich (56A, 56B, 56C) umfasst, der mit der Traverse (18) verbunden ist, wobei der obere Bereich (56A, 56B, 56C) und der untere Bereich (54) zueinander beweglich sind zwischen einem demontierten Zustand, in dem der obere Bereich (56A, 56B, 56C) mit Abstand zum unteren Bereich (56) liegt, und einem zusammengesetzten Zustand, bei dem der obere Bereich (56A, 56B, 56C) und der untere Bereich (54) ineinandergefügt sind, wobei die Höhe des oberen Bereichs (56A, 56B, 56C) des Pfostens der oder jeder zweiten Vorderseite (102A, 102B, 102C) unterschiedlich zu der Höhe des oberen Bereichs (56) des Pfostens der oder jeder ersten Vorderseite (102A, 102B, 102C) ist.

4. Reihe (88, 100) nach Anspruch 3, **dadurch gekennzeichnet, dass** für jede Vorderseite (10; 102A, 102B, 102C) der untere Bereich (54) und der obere Bereich (56; 56A, 56B; 56C) jeweils auf der Grundlage eines Rohrelementes (59, 67) gebildet sind.

5. Reihe (88, 100) nach einem beliebigen der Ansprüche 3 oder 4, **dadurch gekennzeichnet, dass** für jede Vorderseite (10; 102A, 102B, 102C) der untere Balken (50) aus dem gleichen Rohrelement (59) gebildet ist wie der untere Bereich, wobei das Rohrelement (59) zwischen dem unteren Balken (50) und dem unteren Bereich (54) abgewinkelt ist.

6. Reihe (88, 100) nach einem beliebigen der Ansprüche 3 bis 5, **dadurch gekennzeichnet, dass** für jede Vorderseite (10; 102A, 102B, 102C) der mittlere horizontale Querschnitt des unteren Bereichs (54) im Wesentlichen gleich dem mittleren horizontalen Querschnitt des oberen Bereichs (56; 56A, 56B; 56C) ist.

7. Reihe (88, 100) nach einem beliebigen der Ansprüche 3 bis 6, **dadurch gekennzeichnet, dass** für jede Vorderseite (10; 102A, 102B, 102C) der obere Bereich (56; 56A, 56B; 56C) durch Einspannung in der oberen Traverse (18) befestigt ist.

8. Reihe (88, 100) nach einem beliebigen der Ansprüche 3 bis 7, **dadurch gekennzeichnet, dass** jede Vorderseite (10; 102A, 102B, 102C) ein Befestigungsorgan umfasst, das durch den oberen Bereich (56; 56A, 56B; 56C) und die obere Traverse eingebracht ist.

9. Reihe (88, 100) nach einem beliebigen der vorhergehenden Ansprüche, **dadurch gekennzeichnet, dass** die obere Traverse (18) mindestens ein Organ (38) zur Verriegelung einer Abdeckung trägt.

10. Verfahren zum Zusammensetzen einer Reihe (88, 100) von Vorderseiten von Kraftfahrzeugen, wobei jede Vorderseite von dem Typ ist, der umfasst:
- eine obere Quertraverse (18), die dazu dient, an Karosserieelementen (12) des Fahrzeugs befestigt zu werden,
- einen Rahmen (20), wobei der Rahmen unter der Traverse (18) befestigt ist und einen unteren Querbalken (50) und zwei Seitenpfosten (52) umfasst, die den unteren Balken (50) mit der Traverse (18) verbinden,
**dadurch gekennzeichnet, dass** das Verfahren die folgenden Schritte umfasst:
- Liefern einer Mehrzahl von identischen unteren Tragkonstruktionen (80), wobei jede Tragkonstruktion (80) einen unteren Balken (50) und einen unteren Bereich (54) eines Pfostens, der mit dem unteren Balken (50) verbunden ist, umfasst;
- Zusammenfügen mindestens einer ersten Vorderseite (10; 102A, 102B, 102C), das das Liefern und das Verschieben eines oberen Bereichs (56; 56A, 56B; 56C) des Pfostens in Bezug auf den unteren Bereich (54) einer der identischen Tragkonstruktionen (80) zwischen einem demontierten Zustand, bei dem der obere Bereich (56; 56A, 56B; 56C) mit Abstand zum unteren Bereich (54) liegt, und einem zusammengesetzten Zustand, bei dem der obere Bereich (56; 56A, 56B; 56C) und der untere Bereich (54) ineinandergefügt sind, und die Befestigung des oberen Bereichs (56; 56A, 56B; 56C) auf der Traverse (18) umfasst;
- Zusammenfügen mindestens einer zweiten Vorderseite (90; 102A, 102B, 102C), das die Verwendung einer der identischen unteren Tragkonstruktionen (80) umfasst, um einen Pfosten (52) mit geringerer Höhe als die Höhe des Pfostens (52) der oder jeder ersten Vorderseite (10; 102A, 102B, 102C) zu bilden.
